# EUROPEAN PATENT APPLICATION

(11) **EP 3 324 166 A1**
(43) Date of publication of application: **23.05.2018**
(21) Application number: 16199920.6
(22) Date of filing: 22.11.2016
(51) Int. Cl.: G01L 1/24

(54) **FORCE SENSING**

(71) Applicant: Nokia Technologies Oy, 02610 Espoo (FI)
(72) Inventor: HONKALA, Mikko, 02770 Espoo (FI); LINDHOLM, Harri, 00320 Helsinki (FI); TAIPALUS, Tapio, 00340 Helsinki (FI); VETEK, Akos, 00790 Helsinki (FI)
(74) Representative: Espatent Oy

(57) **Abstract**

An apparatus, having an elastic element configured to deform as a force is applied thereto; at least one source element configured to transmit electromagnetic radiation into the elastic element; and at least one detector element configured to detect the electromagnetic radiation that has traversed the elastic element. The elastic element has elastic material transparent to the electromagnetic radiation and optical elements embedded in the elastic transparent material. The optical elements are configured to scatter the electromagnetic radiation in such a way that the scattering is changed in response to the elastic element being deformed

## Description

### TECHNICAL FIELD

The present application generally relates to force sensing. In particular, but not exclusively, the application relates to differential force sensing.

### BACKGROUND

This section illustrates useful background information without admission of any technique described herein representative of the state of the art.

Force sensing is a technical field in which new applications of sensing technology require sensitive and robust force sensors at low cost, either for sensing absolute or differential force.

There are optical force sensing solutions based on measuring deformation of an elastic structure. Such known solutions require a known structure and a careful placement of light source, light sensing elements and reflective structures or patterns in the elastic material. Furthermore, differential force sensing solutions exist. These are typically based on detecting changes of electrical characteristics caused by deformations of material, for example based on a change of capacitance of dielectric material or on piezoelectric effect.

It is the objective of the invention to provide a differential force sensing solution that is robust, simple and has an easily adjustable sensitivity.

### SUMMARY

Various aspects of examples of the invention are set out in the claims.

According to a first example aspect of the present invention, there is provided an apparatus, comprising:
an elastic element configured to deform as a force is applied thereto;
at least one source element configured to transmit electromagnetic radiation into the elastic element; and
at least one detector element configured to detect the electromagnetic radiation that has traversed the elastic element; wherein
the elastic element comprises elastic material transparent to the electromagnetic radiation and optical elements embedded in the elastic transparent material; and wherein
the optical elements are configured to scatter the electromagnetic radiation in such a way that the scattering is changed in response to the elastic element being deformed.

The optical elements may comprise any of reflective elements, air bubbles, aluminium foil cutouts, plastic pellets with dimensions in millimeter range and/or malachite grinded and filtered to particles.

The electromagnetic radiation may comprise visible light.

The elastic material may comprise an elastic gel.

The elastic element may have the from of an elongated thin strip.

The at least one source element and the at least one detector element may be positioned at opposite ends of the elastic element.

The at least one detector element may comprise an imaging sensor.

The at least one source element may comprise a light emitting diode.

According to a second example aspect of the present invention, there is provided a method comprising
transmitting electromagnetic radiation with at least one source element into an elastic element comprising elastic material transparent to the electromagnetic radiation and configured to deform as a force is applied thereto;
detecting with at least one detector element the electromagnetic radiation that has traversed the elastic element; and
calculating a change of force applied to the elastic element; wherein
the elastic element comprises optical elements embedded in the elastic transparent material; and wherein
the optical elements are configured to scatter the electromagnetic radiation in such a way that the scattering is changed in response to the elastic element being deformed.

According to a third example aspect of the present invention, there is provided a system comprising
a processor; and
the apparatus of the first example aspect of the present invention; wherein
the processor is configured to cause calculating a change of force applied to the elastic element

The system may further comprise a memory element and a communication element.

According to a fourth example aspect of the present invention, there is provided a computer program comprising computer code for causing performing the method of the second example aspect of the present invention, when executed by an apparatus.

According to a fifth example aspect of the present invention, there is provided a non-transitory memory medium comprising the computer program of the fourth example aspect of the present invention.

Any memory medium hereinbefore or hereinafter may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device. In the context of this document, a "memory medium" may be any non-transitory media or means that can contain, store, communicate, propagate or transport the instructions for use by or in connection with an instruction execution system, apparatus, or device, such as a computer.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1A shows a schematic principle view of an apparatus according to an example embodiment of the invention;
Fig. 1B shows a schematic principle view of an apparatus according to an example embodiment of the invention;
Fig. 2A shows a schematic principle view of a detector element of an apparatus according to an example embodiment of the invention;
Fig. 2B shows a schematic principle view of a detector element of an apparatus according to an example embodiment of the invention;
Fig. 3 shows a schematic principle block view of an system according to a further example embodiment of the invention; and
Fig. 4 shows a flow chart of a method according to an example embodiment of the invention.

### DETAILED DESCRIPTON OF THE DRAWINGS

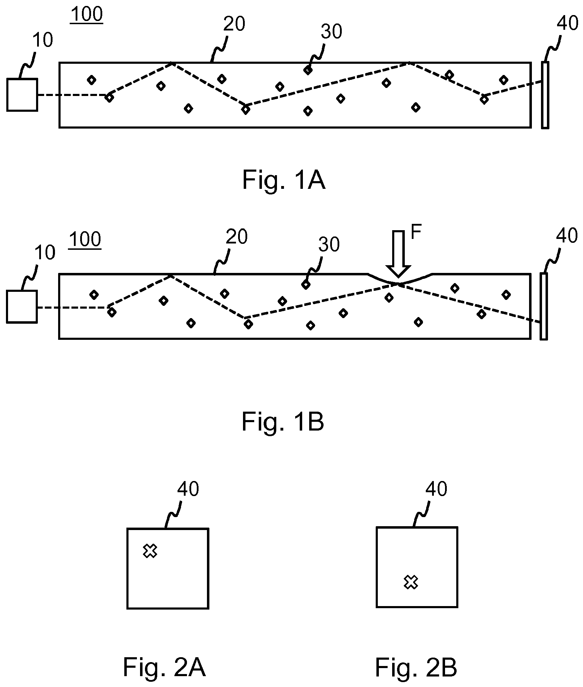

An example embodiment of the present invention and its potential advantages are understood by referring to Figs. 1 through 4 of the drawings. In this document, like reference signs denote like parts or steps.

Figs. 1A and 1B show a schematic principle view of an apparatus according to an example embodiment of the invention. The apparatus 100 is shown in Fig. 1A in a situation in which no force is applied and in Fig 1B in a situation in which force is applied.

The apparatus 100 comprises at least one source element 10 configured to transmit electromagnetic radiation. In an example embodiment, the source element 10 comprises a light source and the electromagnetic radiation comprises light, for example visible or infrared light. In an example embodiment the source element 10 comprises a light emitting diode, LED. In an example embodiment, the apparatus comprises a plurality of source elements 10, such as for example two source elements.

The apparatus 100 further comprises an elastic element 20. The elastic element 20 is configured to be deformed as a force F is applied thereto, as shown schematically in Fig. 1B. In an example embodiment, the elastic element is in the form of an elongated strip, although other forms are also applicable. The elastic element 20 comprises material that, in addition to being elastic, i.e. deformable, is transparent to the electromagnetic radiation transmitted into the elastic element 20 from the source element 10. In an example embodiment, the material comprises transparent gel molded into a suitable form. In a further example embodiment, the elastic element 20 is not straight, but follows for example contours of a surface on which it is placed, i.e. the elastic element is in an embodiment curved or bent.

The elastic element 20 further comprises optical elements 30 embedded, or placed, into the elastic transparent material. The optical elements 30 comprise, in an example embodiment, reflective elements, such as glitter. In a further example embodiment, the optical elements 30 comprise in addition to or instead of the reflective elements further elements such as air bubbles, small aluminium foil cutouts with dimensions in millimeter range, plastic pellets with dimensions in millimeter range and/or malachite grinded and filtered to a particle size in the millimeter range. The optical elements 30 are configured to randomly scatter the electromagnetic radiation, for example light, transmitted into the elastic element 20 from the source element 10.

A force F applied to the elastic element 20 causes the elastic element to deform and the random scattering to change, since the alignment of the elastic element boundaries and/or of the optical elements is changed. A schematic example of a single light beam traversing the elastic element 20 without and with a force F being applied to the elastic element 20 is schematically shown in Figs. 1A and 1B with a dashed line. In reality, the light traversing the elastic element does not comprise a single beam as shown as an example in Figs. 1A and 1B but propagates as a wider beam through multiple routes. In an example embodiment, the surface of the elastic element 20 comprises at least on a part of the surface an opaque layer (not shown) configured to prevent or reduce ambient light from entering the elastic element.

The apparatus 100 further comprises at least one detector element 40. The detector element 40 is configured to receive and detect the electromagnetic radiation that has traversed the elastic element 20 and is incident on the detector element 40. In an example embodiment, the detector element 40 is located at the opposite end of the elastic element 20 from the source element 10. In an example embodiment, the detector element 40 comprises an imaging sensor, such as a CCD imaging sensor. In a further example embodiment, the detector element comprises a two dimensional array of photosensitive elements, a single strip, i.e. 1 dimensional array, of photosensitive elements, or a single photosensitive element. In a further example embodiment, the apparatus comprises a plurality of detector elements 40, for example two imaging sensors. In a still further example embodiment, the plurality of detector elements 40 and the plurality of source elements 10 are located in such a way that they reside on different positions around the elastic element 20, i.e. there are source elements 10 and/or detector elements 40 on several sides of the elastic element 20.

Figs. 2A and 2B show schematic principle views of a detector element 40 of an apparatus according to an example embodiment of the invention. The detector element 40 is shown in Fig. 2A in a situation in which no force is applied and in Fig 2B in a situation in which force is applied, corresponding to the situations depicted in Figs. 1A and 1b as hereinbefore described. Figs. 2A and 2B show, with a cross, the position of an example beam on the detector element 40. As force is applied to the elastic element 20, the pattern formed by the electromagnetic radiation having traversed the elastic element 20 on the detector element 40 changes and accordingly the position of the example beam on the detector element changes, which change is detected and the change of the force applied to the elastic element is calculated from the detected change.

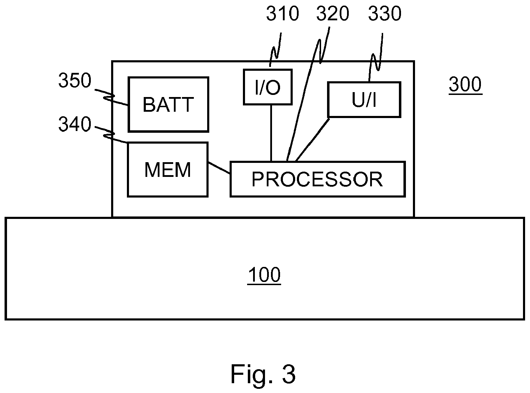

Fig. 3 shows a schematic principle block view of a system according to a further example embodiment of the invention. The system comprises the apparatus 100 as hereinbefore described according to an example embodiment of the invention. The apparatus 100 is connected to a control element 300. In an example embodiment, the control element 300 comprises, or is comprised in, a separate device or comprises a separate element integrated with the apparatus 100. The control element 300 comprises electronics used with the apparatus 100. In an example embodiment, the control element 300 is connected to the apparatus 100 in a conventional manner, for example with wires or wirelessly with e.g. near field communication such as Bluetooth or Near Field Communication, NFC in which case the required communication components are provided on the apparatus 100 and the control element 300.

The control element 300 comprises a memory 340, a battery 350 for powering the control element 300 and a processor 320. The processor 320 is configured to cause storing data from the apparatus 100 into the memory 340. The processor 320 is further configured to cause controlling of the operation of the apparatus 100 and the control element 300 itself using a non-transitory computer program code stored in the memory 340. In a further example embodiment, the control element 300 comprises a communication unit 310 comprising, for example, a local area network (LAN) port; a wireless local area network (WLAN) unit; Bluetooth unit; cellular data communication unit; near field communication unit or satellite data communication unit. In a further example embodiment the control element 300 comprises a user interface unit 330. The processor 320 comprises, for example, any one or more of: a master control unit (MCU); a microprocessor; a digital signal processor (DSP); an application specific integrated circuit (ASIC); a field programmable gate array; and a microcontroller. In a still further example embodiment, the control element 300 comprises, or is comprised in, a personal electronic device such as a wristwatch, a smart watch, an activity bracelet, a mobile phone, a smartphone, a tablet, a computer or a television, configured to co-operate with the apparatus 100.

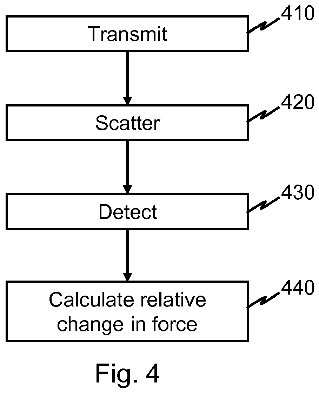

Fig. 4 shows a flow chart of a method according to an example embodiment of the invention. At step 410 electromagnetic radiation, in an example embodiment visible light, is transmitted from the source element 10 into the elastic element 20. At step 420, the light traverses the elastic element 20 and is randomly scattered therein by the optical elements 30 and/or the boundaries of the elastic element 20. The random scattering changes if force is applied to the elastic element 20 so that the elastic element 20 is deformed. At step 430 the light having traversed the elastic element 20 and been scattered therein reaches the detector element 40 and is detected. At step 440 the force applied to the elastic element is calculated from the detected light. In an example embodiment, the detected pattern of light detected by the detector element 40 when force is applied is compared to a previous pattern of light detected by the detector element 40 when no force or a different force has been applied to the elastic element 20 and a differential force is calculated therefrom. A small force applied to the elastic element 20 would change the paths of light traversing the elastic element 20 just a little for most of the light whereas a greater force would change the paths more. In an example embodiment, with an imaging sensor as the detector element 40, the calculation is carried out for example by comparing the values of each pixel of the imaging sensor with a previous values thereof and calculating a sum of differences yielding as result a modulus of time derivative of the deformation of the elastic element 20, i.e. modulus of first time derivative of force.

Some use cases relating to given example embodiments of the differential force sensing are presented in the following. In a first use case, the apparatus 100 is used to detect differential force in a health application for monitoring a sleeping person, for example an adult or even a small baby. The apparatus 100 is placed for example under a mattress in a bed with the elastic element 20 being formed as very thin elongated strip so as to be easily locatable under a mattress or bed linen and not to disturb the person sleeping thereon. The heartbeat, respiration and/or movements of the person are detected by the apparatus 100 combined with the control element 300 which is for example comprised in a personal electronic device.

In a second use case, the apparatus 100 is integrated into an article of clothing or clothing accessory, for example sports clothing. The elastic element 20 is formed into a thin elongated strip or plate and integrated for example into pants legs to detect tension of muscles and the changes in force arising therefrom that deforms the elastic element 20. In such a case, also for example running cadence or further quantities are calculated from the changes in force.

In a third use case, the apparatus 100 is integrated into a surface, for example a wall, floor, the surface of furniture or the surface of an electronic device in order to make the surface functional, i.e. to provide a surface that reacts to force being applied. The apparatus 100 with a thin elongated elastic element 20 follows the contours of the surface, for example under a coat of paint or canvas and detects any change in force being applied on the surface for example in order to activate a further device or action.

Without in any way limiting the scope, interpretation, or application of the claims appearing below, a technical effect of one or more of the example embodiments disclosed herein is the provision of simple differential force sensor with straightforward production. Another technical effect of one or more of the example embodiments disclosed herein is the provision of a robust sensor, since even if the elastic material should get somewhat damaged, the sensor will still operate. Another technical effect of one or more of the example embodiments disclosed herein is a low cost differential force sensor due to the cheapness of the elastic material. A still further technical effect of one or more of the example embodiments disclosed herein is the provision of a differential force sensor requiring no calibration.

Embodiments of the present invention may be implemented in software, hardware, application logic or a combination of software, hardware and application logic. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope of the present invention as defined in the appended claims.

## Claims

1. An apparatus, comprising:
an elastic element configured to deform as a force is applied thereto;
at least one source element configured to transmit electromagnetic radiation into the elastic element; and
at least one detector element configured to detect the electromagnetic radiation that has traversed the elastic element; wherein
the elastic element comprises elastic material transparent to the electromagnetic radiation and optical elements embedded in the elastic transparent material; and wherein
the optical elements are configured to scatter the electromagnetic radiation in such a way that the scattering is changed in response to the elastic element being deformed.

2. The apparatus of claim 1, wherein the optical elements comprise any one or more optical elements selected from a group consisting of: reflective elements, air bubbles, aluminium foil cutouts, plastic pellets with dimensions in millimeter range, and malachite grinded and filtered to particles.

3. The apparatus of claim 1 or 2, wherein the electromagnetic radiation comprises visible light.

4. The apparatus of any preceding claim, wherein the elastic material comprises an elastic gel.

5. The apparatus of any preceding claim, wherein the elastic element has the from of an elongated thin strip.

6. The apparatus of any preceding claim, wherein the at least one source element and the at least one detector element are positioned at opposite ends of the elastic element.

7. The apparatus of any preceding claim, wherein the at least one detector element comprises an imaging sensor.

8. The apparatus of any preceding claim, wherein the at least one source element comprises a light emitting diode.

9. A Method comprising
transmitting electromagnetic radiation with at least one source element into an elastic element comprising elastic material transparent to the electromagnetic radiation and configured to deform as a force is applied thereto;
detecting with at least one detector element the electromagnetic radiation that has traversed the elastic element; and
calculating a change of force applied to the elastic element; wherein
the elastic element comprises optical elements embedded in the elastic transparent material; and wherein
the optical elements are configured to scatter the electromagnetic radiation in such a way that the scattering is changed in response to the elastic element being deformed.

10. A system comprising
a processor; and
the apparatus of any of the claims 1 to 8; wherein
the processor is configured to cause calculating a change of force applied to the elastic element

11. The system of claim 10, further comprising a memory element and a communication element.

12. A computer program comprising computer code for causing performing the method of claim 9, when executed by an apparatus.

13. A non-transitory memory medium comprising the computer program of claim 12.
